# FASCICULE DE BREVET EUROPEEN

(11) **EP 0 887 225 B1**
(45) Date de publication et mention de la délivrance du brevet: **14.11.2001**
(21) Numéro de dépôt: 98401536.2
(22) Date de dépôt: 23.06.1998
(51) Int. Cl.: B60P 3/36, B62D 63/06

(54) **Caravane pliante à chassis amovible**
Faltbarer Wohnwagen mit abnehmbarem Tragrahmen
Collapsible caravan with detachable chassi

(30) Priorité: 26.06.1997 FR 9707999
(43) Date de publication de la demande: 30.12.1998
(73) Titulaire: RACLET, 72600 Mamers (FR)
(72) Inventeur: Fraysse, Gérard, 72600 Mamers (FR); Mercier, Jean-Pierre, 61000 Saint-Germain-de-Corbets (FR)
(74) Mandataire: Hasenrader, Hubert

(56) Documents cités:
- FR-A- 1 366 616
- FR-A- 1 452 202
- FR-A- 2 387 834
- US-A- 2 867 474
- US-A- 3 598 425
- US-A- 4 480 851

## Description

L'invention concerne une caravane pliante à châssis amovible et le procédé permettant de séparer la caisse et le châssis de cette caravane, ladite caravane comprenant une caisse sensiblement en forme de parallélépipède présentant, selon sa longueur, un côté avant et un côté arrière, selon sa largeur, un premier côté et un deuxième côté, et un fond et contenant une armature repliée, une toile et différents éléments de couchage de la caravane, un châssis métallique de support et de remorquage présentant au moins deux roues et un système d'attelage, et un dispositif d'accouplement permettant de solidariser de façon temporaire ladite caisse audit châssis.

Les caravanes sont généralement utilisées sur une très courte période de l'année et constituent souvent un mobilier très encombrant tout au long de leur période de non utilisation. Les caravanes pliantes répondent partiellement à ce problème d'encombrement puisqu'elles présentent un volume réduit lors de leur transport et de leur stockage.

De plus, il est intéressant de pouvoir séparer la caisse de son châssis car si la caisse présente une seule fonction, à savoir contenir et servir de support pour tous les éléments de l'habitacle de la caravane, le châssis peut servir à d'autres utilisations que celle de support de remorquage de la caisse. En effet, on peut employer le châssis comme remorque, porte-moto, porte-vélos ou plateau multi-usages en ajoutant au châssis, éventuellement, des accessoires adaptés à la nouvelle fonction de ce châssis.

Des caravanes pliables présentant un châssis séparable de la caisse ont déjà été proposées dans l'art antérieur. Ainsi, FR 1 366 616 et FR 1 452 202 proposent une remorque de camping comportant une caisse separable du châssis, lui-même muni de roues, selon les caractéristiques du préambule de la revendication 1, sauf en ce qui concerne le contenu de la caisse. Les solutions proposées ne permettent pas une séparation facile et rapide entre les deux parties de la caravane ; les opérations à effectuer sont multiples, requièrent une main d'oeuvre importante ou tout au moins des moyens de levage suffisants pour dégager la caisse du châssis une fois qu'ils sont désolidarisés l'un de l'autre.

L'invention vise à fournir une caravane pliante à châssis amovible dont la séparation entre le châssis de support et de remorquage, d'une part, et la caisse contenant les éléments pliés destinés à former l'habitacle de la caravane, d'autre part, puisse être effectuée rapidement et sans effort particulier par une seule personne. De plus, on souhaite fournir une caravane dont l'encombrement soit réduit lorsque la caisse est détachée du châssis, la caisse étant alors stockée jusqu'à sa prochaine utilisation.

Ces buts sont atteint par le fait que ledit dispositif d'accouplement comporte un premier système d'accouplement disposé du premier côté et à proximité du fond de la caisse et un deuxième système d'accouplement disposé du deuxième côté de la caisse, ledit premier système d'accouplement comprenant des moyens de pivotement permettant le basculement par pivotement de la caisse autour d'un axe parallèle auxdits premier et deuxième côtés de la caisse, lorsque ledit deuxième système d'accouplement est désaccouplé, depuis une première position dans laquelle le fond de la caisse est parallèle audit châssis vers une deuxième position dans laquelle la caisse a sensiblement pivoté de 90°, et des moyens de désaccouplement destinés à désaccoupler le premier côté de la caisse du châssis lorsque ladite caisse est dans sa deuxième position et en ce que ladite caravane comprend en outre des moyens de support et de stockage pouvant être fixés de façon amovible sur ledit premier côté de la caisse et destinés à retenir la caisse dans sa deuxième position.

On comprend que la caravane selon l'invention rend possible, de façon simple et sans effort important, par la présence du double système d'accouplement et des moyens de support et de stockage de la caisse, le basculement de la caisse autour d'un axe de pivotement puis la séparation de la caisse et du châssis par une seule personne, seulement en quelques étapes et de sorte que la caisse séparée soit dans une position de moindre encombrement.

Avantageusement, il est prévu que lesdits moyens de support et de stockage sont au moins constitués d'un berceau présentant une hauteur sensiblement égale à la hauteur dudit châssis.

De manière encore plus avantageuse, ledit berceau comprend au moins deux éléments en forme de cadre fermé ou ouvert placés en regard dudit premier côté de la caisse.

Selon une caractéristique préférentielle, la caravane selon la présente invention comprend en outre des moyens de préhension disposés sur la caisse, au moins sur un des deux côtés parmi le côté avant et le côté arrière, sensiblement à l'extrémité adjacente audit deuxième côté de la caisse.

Selon une autre caractéristique préférentielle, la caravane selon la présente invention comprend en outre au moins deux moyens de stabilisation destinés à être placés sous le châssis, dans des zones proches des coins du châssis, au moins du côté latéral du châssis qui est adjacent au premier système d'accouplement.

Selon un autre aspect de la présente invention, le procédé de séparation entre la caisse et le châssis d'une caravane pliante se caractérise en ce qu'il comprend les étapes suivantes :
- on fixe lesdits moyens de support et de stockage sur ledit premier côté de la caisse,
- on désaccouple la caisse et le châssis au niveau du deuxième système d'accouplement,
- on fait basculer ladite caisse de 90° environ grâce auxdits moyens de pivotement du premier système d'accouplement jusqu'à ce que lesdits moyens de support et de stockage viennent en contact avec le sol,
- on désaccouple les moyens de désaccouplement du premier système d'accouplement afin de désolidariser la caisse du châssis, et
- on sépare le châssis de la caisse qui est renversée sur lesdits moyens de support et de stockage.

D'autres caractéristiques et avantages de la présente invention apparaîtront mieux à la lecture de la description qui suit d'un mode de réalisation de l'invention donné à titre d'exemple non limitatif. La description se réfère aux figures annexées sur lesquelles :
- les figures 1A, 1B et 1C représentent, respectivement, un côté latéral, la face avant et la face arrière d'un mode de réalisation de la caravane pliante objet de la présente invention, telle qu'elle se présente lorsqu'elle est repliée, le châssis et la caisse étant solidaires l'un de l'autre, un berceau ayant été fixé sur la caisse ;
- la figure 2 représente l'agrandissement d'un détail II de la figure 1C sur lequel on voit comment le berceau est fixé sur la caisse ;
- les figures 3A, 3B et 3C sont, respectivement, des vues identiques à celles des figures 1A, 1B et 1C, après mise en place de moyens de stabilisation sous la caisse ;
- la figure 4 représente un agrandissement du détail IV de la figure 3B;
- la figure 5 représente la caravane pliante de la figure 3B pendant le mouvement de basculement de la caisse ;
- la figure 6 représente également la caravane depuis sa face avant, après basculement complet de la caisse et réception de la caisse sur le berceau ;
- la figure 7 représente de façon agrandie le détail VII de la figure 6, c'est-à-dire une partie du dispositif d'accouplement de la caravane ; et
- la figure 8 représente la caravane pliante après désolidarisation et séparation entre le châssis et la caisse basculée et supportée par le berceau.

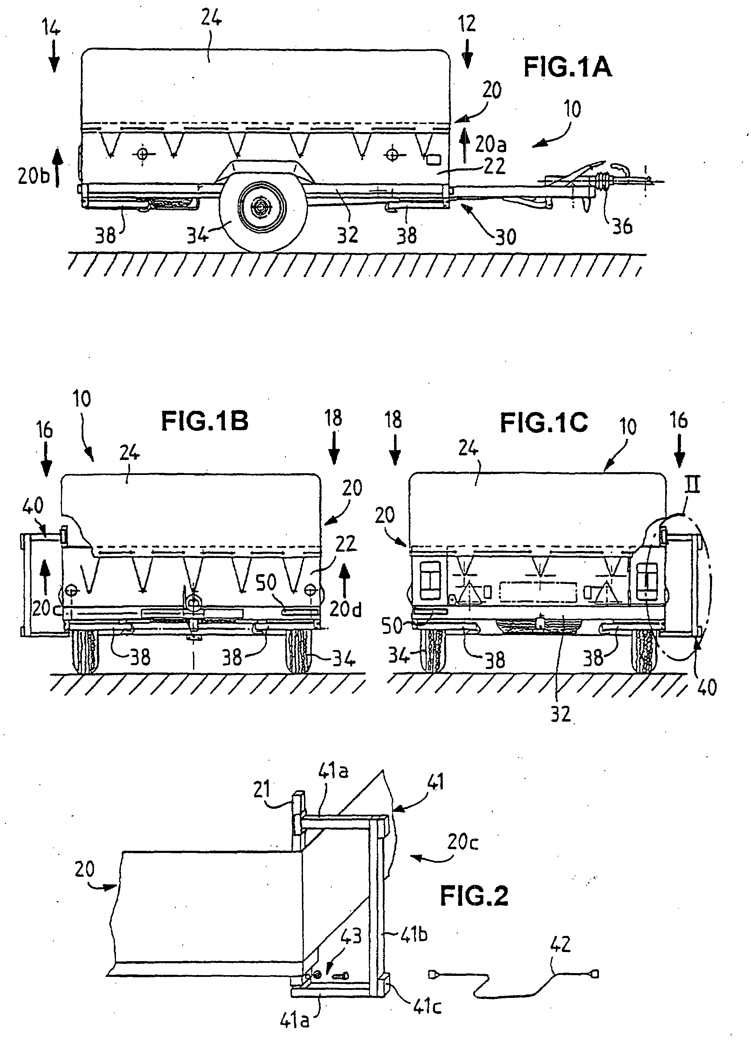

Si l'on se reporte à la figure 1A, la caravane pliante 10 comporte une caisse 20 composée d'un boîtier 22 renfermant tous les éléments de l'habitacle de la caravane, tels qu'une armature repliée et différents éléments de couchage de la caravane, et d'une toile 24 amovible permettant de refermer la caisse 20 afin de protéger les éléments contenus à l'intérieur de la caisse des intempéries et de toute agression extérieure.

Outre la caisse 20, la caravane pliante 10 comporte également un châssis 30 de support et de remorquage, de préférence métallique, constitué d'une armature 32, de deux roues 34 situées de part et d'autre de l'armature 32, d'un système d'attelage 36 destiné à fixer de façon amovible la caravane 10 sur un véhicule qui tracte la caravane 10 et de béquilles 38 dont le rôle sera explicité ci-après.

Afin de repérer les différents côtés de la caravane, on distingue le côté avant 12, le côté arrière 14 et les côtés latéraux référencés 16 pour le premier côté et 18 pour le deuxième côté de la caravane. De la même manière, on distingue les différents côtés de la caisse 20 de la manière suivante : côté avant 20a, côté arrière 20b, et côtés latéraux constitués par un premier côté 20c et un deuxième côté 20d.

Afin de séparer la caisse 20 du châssis 30, la première opération à effectuer consiste à fixer un berceau 40 sur le premier côté 20c de la caisse. Sur les figures 1B et 1C, on peut visualiser ce berceau 40 lorsqu'il est mis en place, le rôle de ce berceau 40 étant décrit ultérieurement.

De préférence, le berceau 40 comporte deux éléments 41 en forme de cadre ouvert, ce cadre formant un U composé de deux montants 41a reliés entre eux par une de leurs extrémités à une traverse 41b, cette traverse 41b portant, du côté opposé à celui des montants 41a, des pieds 41c.

Comme on peut le voir sur la figure 2, chaque extrémité libre des montants 41a vient se fixer sur des parties correspondantes du premier côté 20c de la caisse 20, au moyen d'une manivelle 42 et d'éléments de fixation 43 tels qu'une vis et un écrou. D'autres éléments de fixation 43 peuvent bien sûr être envisagés sans pour autant sortir du cadre de la présente invention. Dans l'exemple illustré à la figure 2, l'élément 41 en forme de U vient se fixer sur une barre correspondante 21 disposée à l'intérieur de la caisse 20, mais on peut concevoir que cette barre 21 est disposée à l'extérieur de la caisse 20 ou encore qu'elle fait partie intégrante de l'élément en forme de cadre 41, de sorte que celui-ci constitue un cadre fermé avec deux montants 41a et deux traverses 41b, l'une des traverses 41b étant constituée par ladite barre de fixation 21.

Afin de bien jouer leur rôle de support comme il sera décrit par la suite, les éléments en forme de cadre 41 du berceau 40 sont au moins au nombre de deux et répartis à une certaine distance les uns des autres le long du premier côté 20c de la caisse 20. De préférence deux éléments en forme de cadre 41 sont prévus aux extrémités avant et arrière du premier côté 20c de la caisse 20.

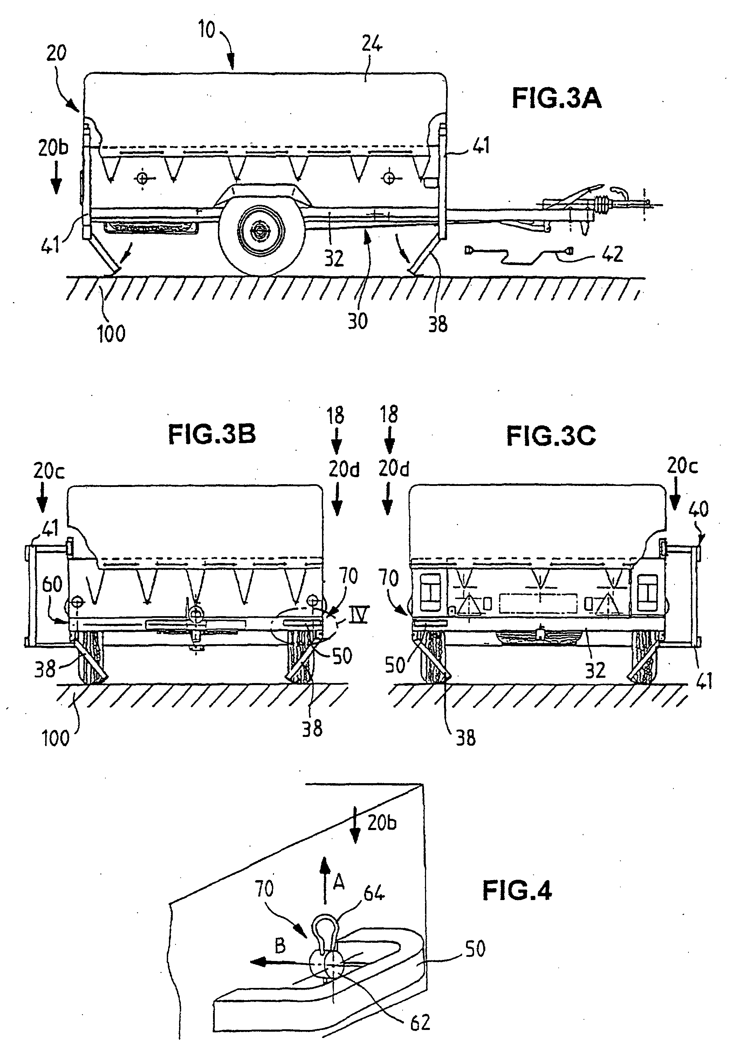

Sur la figure 3A, on a représenté la deuxième étape du procédé de séparation entre le châssis 30 et la caisse 20 de la caravane pliante 10. Les flèches indiquent que les béquilles 38 sont rabattues, par exemple grâce à la manivelle 42, depuis leur position repliée parallèle à l'armature 32 du châssis 30 vers une position dépliée dans laquelle l'extrémité libre des béquilles 38 est en appui sur le sol 100. Sur les figures, la caravane 10 comporte quatre béquilles 38 disposées à chacun des coins du châssis 30, sous l'armature 32 et qui forment, lorsqu'elles sont dans leur position repliées, un angle avec chacun des côtés de la caisse 20, mais il est possible de prévoir d'autres dispositions pour ces béquilles 38. Ainsi, par exemple, il est possible de prévoir des béquilles 38 parallèles à l'un des côtés de la caisse 20. On peut également placer des béquilles 38 uniquement du côté de la caisse 20 destinée à recevoir le berceau 40, c'est-à-dire du premier côté 20c de la caisse 20.

Comme il sera décrit ci-après plus en détail, les béquilles 38 ayant pour rôle de stabiliser la caravane 10 pendant les opérations de déchargement de la caisse 20, ces béquilles 38 peuvent être remplacées par d'autres moyens de stabilisation tels qu'un cric, des vérins ou similaires.

Sur les figures 3B et 3C, on retrouve les béquilles 38 dans leur position dépliée en appui sur le sol 100. En outre, on remarque que le côté arrière 20b de la caisse 20 porte, sensiblement à l'extrémité adjacente au deuxième côté 20d de la caisse 20, une poignée 50 disposée parallèlement au sol.

Afin de pouvoir séparer ou bien solidariser entre eux la caisse 20 et le châssis 30, la caravane 10 de la présente invention comporte en outre un dispositif d'accouplement. Ce dispositif d'accouplement comprend un premier système d'accouplement 60 disposé sensiblement du premier côté 20c de la caisse et un deuxième système d'accouplement 70 disposé sensiblement du deuxième côté 20d de la caisse 20. Dans le mode de réalisation préférentiel décrit et illustré, le premier système d'accouplement 60 et le deuxième système d'accouplement 70 sont similaires, de sorte que les explications données pour l'un d'entre eux sont également valables pour l'autre.

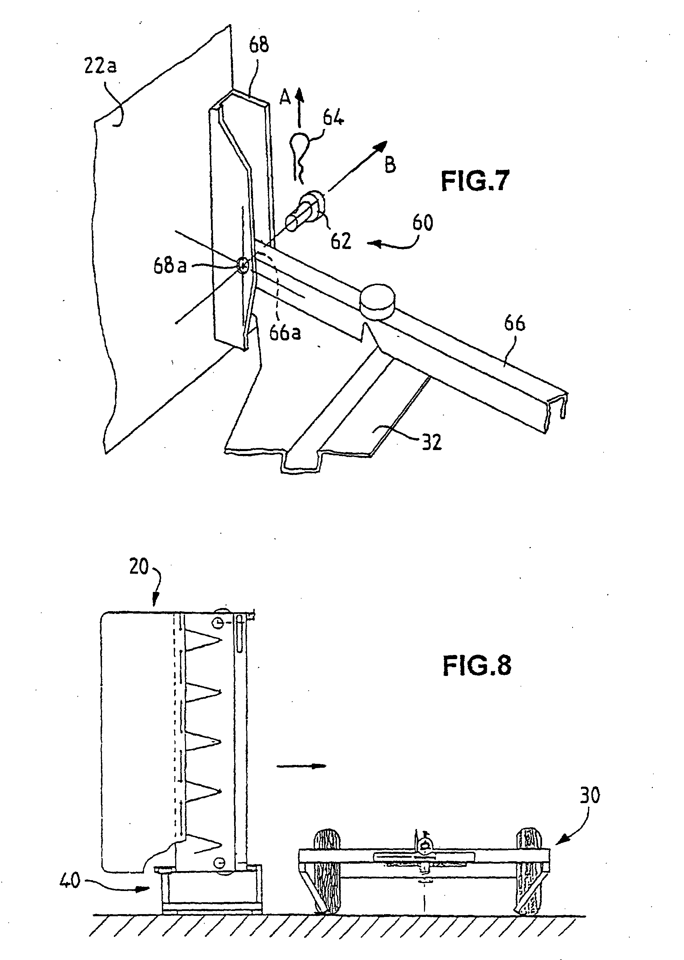

Chacun des premier et deuxième systèmes d'accouplement 60, 70 comporte une partie similaire à l'avant et à l'arrière de la caravane 10, cette partie étant illustrée à la figure 7 dans le cas de la partie du premier système d'accouplement 60 se trouvant à l'avant de la caravane 10. Comme on peut le voir sur cette figure 7, le fond 22a du boîtier 22 porte un profilé 68 en forme de U pouvant entourer un autre profilé 66 fixé à demeure sur l'armature 32 du châssis 30. Afin de pouvoir pivoter entre eux, les profilés 66 et 68 sont munis d'ouvertures 66a et 68a disposées en regard les unes des autres afin qu'un axe 62 puisse s'y insérer et retenir entre eux les profilés 66 et 68, tout en permettant un mouvement de rotation entre ces profilés. Le désaccouplement est permis par le retrait d'une goupille 64 retenant l'axe 62.

Sur la figure 4, outre la poignée 50, on peut également apercevoir les éléments de la partie arrière du deuxième système d'accouplement 70 qui sont visibles depuis l'extérieur du côté arrière 20b de la caisse 20. En effet, on distingue l'axe 62 permettant de solidariser comme il a été décrit précédemment la caisse 20 au châssis 30 et la goupille 64 amovible permettant de bloquer ou de débloquer (voir flèche A) l'axe 62.

La troisième étape du procédé de séparation entre la caisse 20 et le châssis 30 consiste à ouvrir, c'est-à-dire à désaccoupler, le deuxième système d'accouplement 70 en retirant la goupille 64 selon la flèche A (figure 4), puis en retirant l'axe 62 selon une direction représentée par la flèche B. Sur la figure 4, on a représenté la poignée 50 à proximité et autour des éléments extérieurs à la caisse 20 de la partie du deuxième système d'accouplement 70 mais d'autres emplacements peuvent bien sûr être choisis pour la poignée 50, de sorte que l'axe 62 peut être retiré selon une direction opposée à celle de la flèche B.

Après l'ouverture du deuxième système d'accouplement 70, la caisse 20 et le châssis 30 ne sont plus fixés l'un à l'autre le long du deuxième côté latéral 18 de la caravane 10.

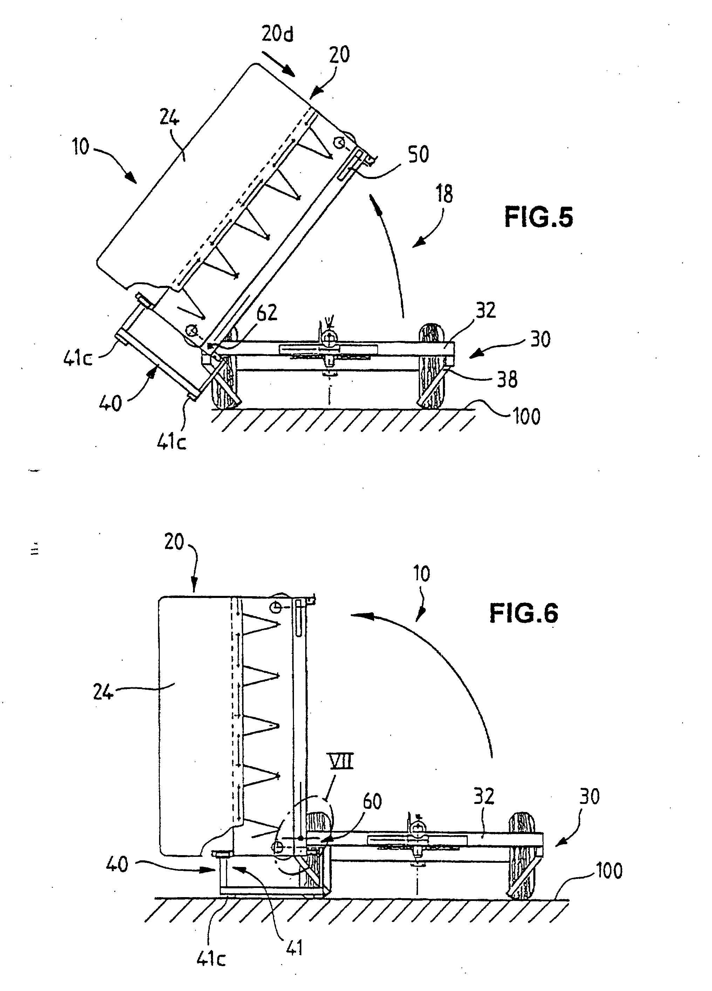

L'opérateur peut alors effectuer la quatrième opération consistant à faire basculer la caisse 20 autour des moyens de pivotement du premier système d'accouplement 60, ces moyens étant constitués par les axes 62. Afin de faciliter cette manoeuvre, l'opérateur saisit une des poignées 50 lui permettant de guider le mouvement en rotation de la caisse 20 autour des axes 62 (voir la flèche de la figure 5). Grâce aux béquilles 38, la caisse 20, qui représente le poids principal de la caravane, peut être basculée sans pour autant que le châssis ne soit également entraîné.

A la fin de la quatrième opération, lorsque la caisse 20 a sensiblement basculé de 90°, le berceau 40 rentre alors en contact avec le sol 100 par l'intermédiaire des pieds 41c de chacun des éléments en forme de cadre 41. La caisse 20 est encore reliée au châssis 30 par le premier système d'accouplement 60, mais c'est uniquement le berceau 40 qui supporte la charge de la caisse 20 en lui servant de support.

D'après les explications précédentes, on comprend que le berceau 40 possède une hauteur sensiblement égale à la hauteur du châssis 30. De façon plus précise, comme on le comprend d'après la figure 5, la distance entre l'extrémité libre des pieds 41c du berceau et les axes 62 du premier système d'accouplement 60 doit être égale à la distance séparant les axes 62 du sol 100.

Afin de désolidariser la caisse 20 du châssis 30, il ne reste alors plus qu'à effectuer la cinquième opération consistant en l'ouverture du premier système d'accouplement 60 (voir figure 7). Il suffit pour cela de retirer manuellement, pour chacune des deux parties du premier système d'accouplement 60, la goupille 64 (flèche A) constituant ainsi des moyens de désaccouplement, puis de retirer l'axe 62 selon la direction B.

Après l'ouverture du premier système d'accouplement 60, la caisse 20 et le châssis 30 sont séparés l'un de l'autre et il est alors possible (voir figure 8), au cours de la sixième et dernière opération, de replier éventuellement les béquilles 38 et de séparer le châssis 30 de la caisse 20 en faisant rouler le châssis 30. Le châssis 30 peut alors être utilisé à d'autres fins que celles de support de remorquage de la caisse 20 de la caravane 10.

On comprend d'après ce qui précède, que la caravane pliante selon la présente invention permet, outre le fait de réaliser facilement rapidement et sans effort la séparation entre la caisse 20 et le châssis 30, de placer la caisse 20 verticalement, c'est-à-dire les côtés latéraux 20c et 20d parallèles au sol 100, de sorte que, dans cette position, la caisse 20 présente un encombrement très limité, ce qui permet un gain de place important pendant le stockage de la caravane 10.

Pour remettre la caisse 20 sur le châssis 30, il suffit d'effectuer en sens inverse les opérations décrites précédemment.

Des variantes de réalisation sont bien sûr possibles sans pour autant sortir du cadre de la présente invention comme défini par les revendications suivantes. Ainsi, par exemple, le premier système d'accouplement 60 et le deuxième système d'accouplement 70 peuvent être de nature différente. Toutefois, le premier système d'accouplement 60 présent du même côté latéral de la caisse et de façon adjacente par rapport au berceau 40, doit pouvoir permettre le basculement de la caisse 20 par pivotement autour d'un axe parallèle aux premier et deuxième côtés 16 et 17 de la caravane 10.

## Revendications

1. Caravane pliante (10) à châssis amovible comprenant :
- une caisse (20) sensiblement en forme de parallélépipède présentant, selon sa longueur, un côté avant (20a) et un côté arrière (20b), selon sa largeur, un premier côté (20c) et un deuxième côté (20d), et un fond (22a) et contenant une armature repliée, une toile (24) et différents éléments de couchage de la caravane,
- un châssis (30) métallique de support et de remorquage présentant au moins deux roues (34) et un système d'attelage (36), et
- un dispositif d'accouplement permettant de solidariser de façon temporaire ladite caisse audit châssis,
**caractérisée en ce que** ledit dispositif d'accouplement comporte un premier système d'accouplement (60) disposé du premier côté (20c) et à proximité du fond (22) de la caisse (20) et un deuxième système d'accouplement (70) disposé du deuxième côté (20d) de la caisse, ledit premier système d'accouplement (60) comprenant des moyens de pivotement (62) permettant le basculement par pivotement de la caisse (20) autour d'un axe parallèle auxdits premier et deuxième côtés (20c, 20d) de la caisse, lorsque ledit deuxième système d'accouplement (70) est désaccouplé, depuis une première position dans laquelle le fond (22) de la caisse est parallèle audit châssis (30) vers une deuxième position dans laquelle la caisse (20) a sensiblement pivoté de 90°, et des moyens de désaccouplement (64) destinés à désaccoupler le premier côté (20c) de la caisse du châssis (30) lorsque ladite caisse est dans sa deuxième position
et **en ce qu'**elle comprend en outre des moyens de support et de stockage (40) pouvant être fixés de façon amovible sur ledit premier côté (20c) de la caisse et destinés à retenir la caisse (20) dans sa deuxième position.

2. Caravane selon la revendication 1, **caractérisée en ce que** lesdits moyens de support et de stockage sont au moins constitués d'un berceau (40) présentant une hauteur sensiblement égale à la hauteur dudit châssis (30).

3. Caravane selon la revendication 2, **caractérisée en ce que** ledit berceau (40) comprend au moins deux éléments (41) en forme de cadre fermé ou ouvert placés en regard dudit premier côté (20c) de la caisse.

4. Caravane selon l'une quelconque des revendications précédentes, **caractérisée en ce qu'**elle comprend en outre des moyens de préhension (50) disposés sur la caisse (20), au moins sur un des deux côtés parmi le côté avant (20a) et le côté arrière (20b), sensiblement à l'extrémité adjacente audit deuxième côté (20d) de la caisse.

5. Caravane selon l'une quelconque des revendications précédentes, **caractérisée en ce qu'**elle comprend en outre au moins deux moyens de stabilisation (38) destinés à être placés sous le châssis (30), dans des zones proches des coins du châssis, au moins du côté latéral du châssis qui est adjacent au premier système d'accouplement (60).

6. Procédé de séparation entre la caisse et le châssis d'une caravane selon l'une quelconque des revendications précédentes, **caractérisé en ce qu'**il comprend les étapes suivantes :
- on fixe lesdits moyens de support et de stockage (40) sur ledit premier côté (20c) de la caisse (20),
- on désaccouple la caisse (20) et le châssis (30) au niveau du deuxième système d'accouplement (70),
- on fait basculer ladite caisse de 90° environ grâce auxdits moyens de pivotement (62) du premier système d'accouplement (60) jusqu'à ce que lesdits moyens de support et de stockage (40) viennent en contact avec le sol (100),
- on désaccouple les moyens de désaccouplement (64) du premier système d'accouplement (60) afin de désolidariser la caisse (20) du châssis (30), et
- on sépare le châssis (30) de la caisse (20) qui est renversée sur lesdits moyens de support et de stockage (40).

## Patentansprüche

1. Faltwohnwagen (10) mit abnehmbarem Fahrgestell mit
- einem Kasten (20), welcher nahezu parallelepipedförmig ist und der Länge nach eine Vorderseite (20a) und eine Rückseite (20b) und der Breite nach eine erste Seite (20c) und eine zweite Seite (20d) sowie einen Boden (22a) aufweist und ein eingeklapptes Gestänge, eine Plane (24) und verschiedene Schlafeinrichtungen des Faltwohnwagens enthält,
- einem Träger- und Anhängerfahrgestell (30) aus Metall, das mindestens zwei Räder (34) und ein Anhängerzugsystem (36) aufweist und
- einer Kupplungsvorrichtung, die das vorübergehende feste Verbinden des Kastens mit dem Fahrgestell ermöglicht,
**dadurch gekennzeichnet, daß** diese Kupplungsvorrichtung ein erstes Kupplungssystem (60), das an der ersten Seite (20c) in der Nähe des Bodens (22) des Kastens (20) angeordnet ist, und ein zweites Kupplungssystem (70), das an der zweiten Seite (20d) des Kastens angeordnet ist, umfaßt, wobei dieses erste Kupplungssystem (60) Mittel zum Schwenken (62) aufweist, die durch Schwenken des Kastens (20) um eine zur ersten und zur zweiten Seite (20c, 20d) des Kastens parallelen Achse nach Lösen des zweiten Kupplungssystems (70) das Kippen von einer ersten Stellung, in der der Boden (22) des Kastens parallel zum Fahrgestell (30) ist, in eine zweite Stellung ermöglicht, in der der Kasten (20) im wesentlichen um 90° geschwenkt ist, und Mittel zum Abkuppeln (64) umfaßt, die zum Lösen der ersten Seite (20c) des Kastens vom Fahrgestell (30) vorgesehen sind, wenn sich der Kasten in seiner zweiten Stellung befindet, und daß der Faltwohnwagen zudem Auflage- und Lagerungsmittel (40) umfaßt, die abnehmbar an der ersten Seite (20c) des Kastens befestigt werden können und den Kasten (20) in seiner zweiten Stellung halten sollen.

2. Faltwohnwagen nach Anspruch 1,
**dadurch gekennzeichnet, daß** die Auflage- und Lagerungsmittel mindestens aus einem Kippgestell (40) bestehen, dessen Höhe im wesentlichen der Höhe des Fahrgestells (30) entspricht.

3. Faltwohnwagen nach Anspruch 2,
**dadurch gekennzeichnet, daß** das Kippgestell (40) mindestens zwei Teile (41) in Form eines geschlossenen oder offenen Rahmens umfaßt, die gegenüber der ersten Seite (20c) des Kastens angeordnet sind.

4. Faltwohnwagen nach einem der vorhergehenden Ansprüche,
**dadurch gekennzeichnet, daß** er ferner Greifmittel (50) umfaßt, die am Kasten (20) mindestens an einer der beiden Seiten zwischen der Vorderseite (20a) und der Rückseite (20b) im wesentlichen an dem Ende angeordnet sind, das an die zweite Seite (20d) des Kastens angrenzt.

5. Faltwohnwagen nach einem der vorhergehenden Ansprüche,
**dadurch gekennzeichnet, daß** er ferner wenigstens zwei Stabilisierungsmittel (38) umfaßt, die unter dem Fahrgestell (30) in der Nähe der Fahrgestellecken mindestens an der Seite des Fahrgestells angebracht sein sollen, die an das erste Kupplungssystem (60) angrenzt.

6. Verfahren zum Trennen des Kastens vom Fahrgestell eines Faltwohnwagens nach einem der vorhergehenden Ansprüche,
**dadurch gekennzeichnet, daß** es folgende Schritte umfaßt:
- Befestigen der Auflage- und Lagerungsmittel (40) an der ersten Seite (20c) des Kastens (20);
- Lösen des Kastens (20) vom Fahrgestell (30) in Höhe des zweiten Kupplungssystems (70);
- Schwenken des Kastens um ca. 90° mittels der Schwenkmittel (62) des ersten Kupplungssystems (60), bis die Auflage- und Lagerungsmittel (40) den Boden (100) berühren;
- Lösen der Abkupplungsmittel (64) des ersten Kupplungssystems (60), um die Verbindung zwischen Kasten (20) und Fahrgestell (30) zu lösen;
- Trennen des Fahrgestells (30) vom Kasten (20), der auf die Auflage- und Lagerungsmittel (40) gekippt wird.

## Claims

1. Collapsible caravan (10) with detachable chassis comprising:
- a body (20) in roughly the shape of a parallelepiped having, along its length, a front side (20a) and a rear side (20b), along its width, a first side (20c) and a second side (20d), and a bottom (22a) and containing a folded framework, a canvas (24) and various elements for laying the caravan up,
- a metal support and towing chassis (30) having at least two wheels (34) and a hitching system (36), and
- a coupling device allowing the said body to be secured temporarily to the said chassis,
**characterized in that** the said coupling device comprises a first coupling system (60) arranged on the first side (20c) and near the bottom (22) of the body (20) and a second coupling system (70) arranged on the second side (20d) of the body, the said first coupling system (60) comprising pivoting means (62) allowing the body (20) to be tipped by pivoting about an axis parallel to the said first and second sides (20c, 20d) of the body when the said second coupling system (70) is uncoupled, from a first position in which the bottom (22) of the body is parallel to the said chassis (30) to a second position in which the body (20) has pivoted through roughly 90°, and uncoupling means (64) intended to uncouple the first side (20c) of the body from the chassis (30) when the said body is in its second position,
and **in that** it further comprises support and storage means (40) which can be fixed removably to the said first side (20c) of the body and are intended to hold the body (20) in its second position.

2. Caravan according to Claim 1, **characterized in that** the said support and storage means at least consist of a cradle (40) having a height roughly equal to the height of the said chassis (30).

3. Caravan according to Claim 2, **characterized in that** the said cradle (40) comprises at least two elements (41) in the form of a closed or open frame placed facing the said first side (20c) of the body.

4. Caravan according to any one of the preceding claims, **characterized in that** it further comprises means (50) for grasping, these being arranged on the body (20) at least on one of the two sides out of the front side (20a) and the rear side (20b), roughly at the end adjacent to the said second side (20d) of the body.

5. Caravan according to any one of the preceding claims, **characterized in that** it further comprises at least two stabilizer means (38) intended to be placed under the chassis (30) in regions near the corners of the chassis, at least on the lateral side of the chassis adjacent to the first coupling system (60).

6. Method for separating the body and the chassis of a caravan according to any one of the preceding claims, **characterized in that** it comprises the following steps:
- the said support and storage means (40) are fixed to the said first side (20c) of the body (20),
- the body (20) and the chassis (30) are uncoupled at the second coupling system (70),
- the said body is tipped through about 90° by virtue of the said pivoting means (62) of the first coupling system (60) until the said support and storage means (40) come into contact with the ground (100),
- the uncoupling means (64) of the first coupling system (60) are uncoupled so as to detach the body (20) from the chassis (30), and
- the chassis (30) is separated from the body (20) which is tipped over onto the said support and storage means (40).
